# EUROPEAN PATENT APPLICATION

(11) **EP 4 822 922 A1**
(43) Date of publication of application: **14.10.2026**
(21) Application number: 24900210.6
(22) Date of filing: 30.07.2024
(51) Int. Cl.: H02G 1/10, F16L 1/00, F16L 1/12, F16L 1/235

(54) **METHOD FOR LAYING SUBAQUEOUS CABLE, AND COMPONENT FOR LAYING SUBAQUEOUS CABLE**

(30) Priority: 08.12.2023 JP 2023207667
(71) Applicant: Sumitomo Electric Industries, Ltd., Osaka-shi, Osaka 541-0041 (JP)
(72) Inventor: MIYAZAKI, Takuya, Osaka-shi, Osaka 541-0041 (JP); HASEGAWA, Mamoru, Osaka-shi, Osaka 541-0041 (JP); KIMURA, Hiroyuki, Osaka-shi, Osaka 541-0041 (JP)
(74) Representative: Grünecker Patent- und Rechtsanwälte PartG mbB
(86) International application number: PCT/JP2024/027083
(87) International publication number: WO 2025/120912

(57) **Abstract**

An underwater cable laying method includes a step of laying, on a water bottom, an underwater cable mounted on a ship. The step of laying the underwater cable includes a step of monitoring a touchdown point for the underwater cable using a camera footage and position information from a first transponder of an acoustic positioning system, and a step of inserting the underwater cable drawn out from the ship through the inside of a cable guide pipe suspended in water from the ship and disposing the underwater cable at the touchdown point while monitoring the touchdown point. The cable guide pipe is connected to a wire, which extends from the ship into the water, and is disposed in front of the wire in the traveling direction of the ship without being connected to an excavator that excavates the water bottom. The camera and the first transponder are attached to a lower end of the cable guide pipe or the wire located near the touchdown point.

## Description

### TECHNICAL FIELD

The present disclosure relates to an underwater cable laying method, and an underwater cable laying component.

The present application claims priority to Japanese Patent Application No. 2023-207667 filed on December 8, 2023, the entire contents of which are incorporated herein by reference.

### BACKGROUND ART

PTL 1 discloses a method for monitoring a landing state of an elongate body such as an optical fiber cable which is drawn out from a laying ship and is laid on the seabed while being guided to the seabed by a guide means. The guide means includes a guide wire suspended in water from the laying ship and a plurality of guide rings attached to the guide wire at predetermined intervals. Each guide ring is connected to the guide wire and is disposed behind the guide wire in the traveling direction of the laying ship. The elongate body is inserted through the inside of each guide ring and is disposed on the seabed. The lower end of the guide wire is provided with a monitoring means for monitoring the touchdown point. The monitoring means is connected to an umbilical cable extending from the laying ship. The umbilical cable is fixed to the guide wire at a predetermined gap.

### CITATION LIST

### PATENT LITERATURE

PTL 1: Japanese Patent Laying-Open No. H04-321887

### SUMMARY OF INVENTION

An underwater cable laying method according to the present disclosure includes a step of laying, on a water bottom, an underwater cable mounted on a ship. The step of laying the underwater cable includes a step of monitoring a touchdown point for the underwater cable using a camera footage and position information from a first transponder of an acoustic positioning system, and a step of inserting the underwater cable drawn out from the ship through the inside of a cable guide pipe suspended in water from the ship and disposing the underwater cable at the touchdown point while monitoring the touchdown point. The cable guide pipe is connected to a wire, which extends from the ship into the water, and is disposed in front of the wire in the traveling direction of the ship without being connected to an excavator that excavates the water bottom. The camera and the first transponder are attached to a lower end of the cable guide pipe or the wire located near the touchdown point.

### BRIEF DESCRIPTION OF DRAWINGS

[Fig. 1] Fig. 1 is a schematic view illustrating an underwater cable laying method according to a first embodiment.
[Fig. 2] Fig. 2 is a schematic perspective view illustrating a cylindrical cage-shaped member that constitutes a cable guide pipe used in the underwater cable laying method according to the first embodiment.
[Fig. 3] Fig. 3 is a schematic front view illustrating the cylindrical cage-shaped member of Fig. 2.
[Fig. 4] Fig. 4 is a schematic top view illustrating a state in which the cylindrical cage-shaped members of Fig. 2 are arranged in series.
[Fig. 5] Fig. 5 is a schematic diagram illustrating an underwater cable laying method according to a second embodiment.
[Fig. 6] Fig. 6 is a schematic diagram illustrating an underwater cable laying method according to a third embodiment.

### DETAILED DESCRIPTION

### [Problem to be Solved by the Present Disclosure]

The following may occur if the guide ring is connected to the guide wire and is disposed behind the guide wire in the traveling direction of the ship. When the elongate body is being inserted through the inside of the guide ring, the elongate body may come into contact with the guide ring, which causes the guide ring to rotate about the guide wire so that it is disposed from the rear side to the front side of the guide wire in the traveling direction of the ship. The rotated guide ring rubs against the elongate body, which causes damage to the elongate body. Furthermore, the umbilical cable may become entangled.

An object of the present disclosure is to provide an underwater cable laying method in which an underwater cable is less likely to be damaged during the laying process.

### [Advantageous Effect of the Present Disclosure]

According to the underwater cable laying method of the present disclosure, the underwater cable is less likely to be damaged during the laying process.

### [Description of Embodiments of the Present Disclosure]

Firstly, embodiments of the present disclosure will be described.
(1) An underwater cable laying method according to an aspect of the present disclosure includes a step of laying, on a water bottom, an underwater cable mounted on a ship. The step of laying the underwater cable includes a step of monitoring a touchdown point for the underwater cable using a camera footage and position information from a first transponder of an acoustic positioning system, and a step of inserting the underwater cable drawn out from the ship through the inside of a cable guide pipe suspended in water from the ship and disposing the underwater cable at the touchdown point while monitoring the touchdown point. The cable guide pipe is connected to a wire, which extends from the ship into the water, and is disposed in front of the ship in the traveling direction of the ship without being connected to an excavator that excavates the water bottom. The camera and the first transponder are attached to a lower end of the cable guide pipe or the wire located near the touchdown point.

In the underwater cable laying method of the above (1), the cable guide pipe is connected to the wire and is disposed in front of the wire in the traveling direction of the ship. Therefore, even if the underwater cable comes into contact with the cable guide pipe when the underwater cable is inserted through the inside of a cable guide pipe, the cable guide pipe is prevented from rotating about the wire. Therefore, it is possible to prevent the cable guide pipe and the underwater cable from rubbing against each other, and thereby the underwater cable is less likely to be damaged.

In the underwater cable laying method according to the above (1), a distance from the camera to the water bottom can be determined from a video of the water bottom captured by the camera. Furthermore, the first transponder can obtain three-dimensional position information of a location to which the first transponder is attached. In other words, the distance from the stern to the first transponder in the vertical direction can be determined. Therefore, it is possible to obtain the distance from the stern to the touchdown point in the vertical direction, which is the sum of a distance from the stern to the first transponder in the vertical direction and a distance from the first transponder and the camera to the water bottom.

In the underwater cable laying method according to the above (1), the camera and the first transponder can be used to continuously monitor the touchdown point. By monitoring the touchdown point, the underwater cable can be laid in a desired position. Furthermore, it is possible to determine whether the laid underwater cable is appropriately buried in the water bottom. By determining the distance from the stern to the touchdown point in the vertical direction, the underwater cable can be laid in such a manner that the residual tension of the laid underwater cable is within a desired range. Furthermore, the underwater cable can be laid in such a manner that the bending radius of the underwater cable at the touchdown point for the underwater cable is within an allowable range. Furthermore, an abnormality in the appearance of the underwater cable can be observed by using a video captured by the camera. Furthermore, the distance between the water bottom and the lower end of the cable guide pipe or wire located near the touchdown point can be determined. The determined distance can be used to adjust the three-dimensional coordinates of the lower end of the gas conduit.

Since the touchdown point can be monitored by using the camera and the first transponder, the underwater cable laying method of the above (1) does not require the use of a remotely operated vehicle (ROV). An ROV is limited by weather conditions. For example, under a weather condition under which an ROV cannot be used such as when the water current is fast, the laying operation must be put on hold. However, since the underwater cable laying method of the above (1) does not use an ROV, there are fewer or no limitations on the weather conditions as compared with the case when an ROV is used. In other words, according to the underwater cable laying method of the above (1), it is possible to shorten or eliminate the waiting time due to the weather conditions. Furthermore, since the underwater cable laying method of the above (1) does not use an ROV, it is possible to reduce the cost.

(2) In the underwater cable laying method according to the above (1), the step of laying the underwater cable may further include a step of monitoring the linearity of the cable guide pipe using position information from the first transponder and position information from a second transponder of the acoustic positioning system attached to an upper end of the cable guide pipe or the wire located in the water near a water surface. In the step of laying the underwater cable, the underwater cable is laid at the touchdown point while monitoring the linearity.

In the underwater cable laying method according to the above (2), the linearity of the underwater cable in the cable guide pipe can be monitored by monitoring the linearity of the cable guide pipe. Therefore, in the underwater cable laying method according to the above (2), it is possible to determine whether the underwater cable in the cable guide pipe is subjected to a load such as excessive bending.

(3) In the underwater cable laying method according to the above (1) or (2), the step of laying the underwater cable may further include a step of excavating the water bottom using the excavator suspended in the water from the ship. In the step of laying the underwater cable, the underwater cable is laid at a location excavated by the excavator. The excavator is equipped with a sand pump.

An excavator equipped with a sand pump can suck up soil on the water bottom and discharge the sucked soil. Therefore, according to the underwater cable laying method of the above (4), it is possible to continuously perform the step of forming a trench by excavating the water bottom, the step of laying the underwater cable in the trench at a touchdown point for the underwater cable, and the step of burying the underwater cable. In other words, according to the underwater cable laying method of the above (4), while a trench is being formed by excavating the water bottom, the underwater cable can be disposed at the touchdown point for the underwater cable in the formed trench, and the underwater cable can be disposed at the touchdown point in the trench and buried at the same time.

(4) An underwater cable laying component according to an aspect of the present disclosure includes a cable guide pipe having a plurality of cylindrical cage-shaped members through which an underwater cable is inserted, and a wire that connects the plurality of cylindrical cage-shaped members in such a manner that the plurality of cylindrical cage-shaped members are arranged in series. Each of the plurality of cylindrical cage-shaped members is provided with a through hole through which the wire is inserted. A central axis of the through hole is parallel to a central axis of each of the plurality of cylindrical cage-shaped members. The wire has a stopper for positioning the plurality of cylindrical cage-shaped members by stopping or fixing the plurality of cylindrical cage-shaped members at intervals.

The underwater cable laying component of the above (4) can be suitably used in the underwater cable laying method of the above (1). The wire is provided with a plurality of stoppers. Therefore, each stopper is only required to support the weight of a cylindrical cage-shaped member disposed between adjacent stoppers, which reduces the load acting on each stopper. If the number of stoppers is one and is provided at the lower end of the wire, the single stopper is required to support the weight of all the cylindrical cage-shaped members.

(5) In the underwater cable laying component according to the above (4), each of the plurality of cylindrical cage-shaped members may include a main body which has a cylindrical cage shape and through which the underwater cable is inserted and a protruding portion which extends from the main body in a direction away from a central axis of the main body. The through hole is provided in the protruding portion.

In the underwater cable laying component according to the above (5), since the through hole through which the wire is inserted is provided in the protruding portion which is different from the main body through which the underwater cable is inserted, it is possible to prevent the wire and the underwater cable from interfering with each other.

(6) In the underwater cable laying component according to the above (5), the main body may include a base portion and a door portion that is movably connected to the base portion to open and close the main body.

In the underwater cable laying component according to the above (6), the door portion allows the cylindrical cage-shaped member to be fitted from a lateral side of the underwater cable. Therefore, the cylindrical cage-shaped member can be placed in the water by fitting the cylindrical cage-shaped member on the ship from a lateral side of the underwater cable and dropping the cylindrical cage-shaped member into the water. Therefore, the underwater cable laying component of the above (6) can improve the workability of the underwater cable laying method.

(7) In the underwater cable laying component according to the above (6), the protruding portion may include a first protruding portion connected to the base portion and a second protruding portion connected to the door portion. The second protruding portion and the first protruding portion form the through hole when the door portion is closed.

In the underwater cable laying component according to the above (7), the cylindrical cage-shaped member can be fitted from a lateral side of the wire by opening as the door portion.

### [Details of Embodiments of the Present Disclosure]

Hereinafter, embodiments of an underwater cable laying method and an underwater cable laying component according to the present disclosure will be described with reference to the drawings. he shapes, sizes, and positional relationships illustrated in the drawings are expressed for the purpose of clarifying the description, and do not necessarily represent the actual shapes, sizes, and positional relationships. In the drawings, the same reference numerals denote the same components. It should be noted that the present invention is not limited to the configuration described in the embodiments, but is defined by the scope of the claims and is intended to include all modifications within the meaning and scope equivalent to the scope of the claims.

In the embodiments, the term "water" in expressions such as "water bottom", "underwater", and "water surface" refers to "sea", "lake", or "river". In other words, the water bottom refers to a sea bottom, a lake bottom, or a river bottom; underwater means under sea, lake, or river; and the water surface refers to a sea surface, a lake surface, or a river surface.

### [First Embodiment]

### [Underwater Cable Laying Method]

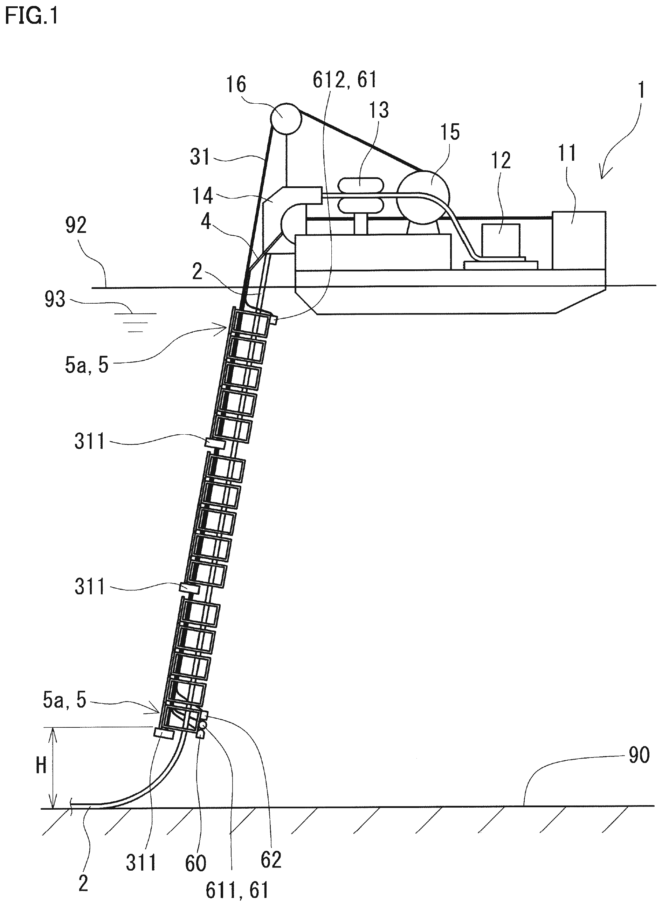

With reference to Figs. 1 to 4, an underwater cable laying method according to a first embodiment will be described. The underwater cable laying method according to the first embodiment is a method of laying, on a water bottom 90, an underwater cable 2 that electrically connects an on-land facility to an on-water facility, an on-land facility to an underwater facility, an on-water facility to another on-water facility, an underwater facility to another underwater facility, or an on-water facility to an underwater facility. The underwater cable laying method according to the first embodiment can be used to construct an underwater cable line that includes underwater cable 2 connecting these facilities. The on-land facility is, for example, an electric power substation. The on-water facility is, for example, an offshore power plant or an offshore power station. The offshore power plant is equipped with, for example, an offshore wind power generator or an offshore wave power generator. The offshore wind power generator may be a bottom-mounted wind power generator whose foundation is fixed to the sea bottom or a floating wind power generator whose foundation is anchored in the sea. The underwater facility is, for example, a subsea power plant. The subsea power plant is equipped with, for example, a tidal current power generator or an ocean current power generator. As underwater cable 2, any known underwater cable such as a dynamic cable may be used. The underwater cable laying method according to the first embodiment includes a step A of laying, on water bottom 90, underwater cable 2 mounted on a ship 1. One of the features of the underwater cable laying method according to the first embodiment is that step A includes a step A1 of monitoring a touchdown point for underwater cable 2 and a step A2 of disposing the drawn-out underwater cable 2 at the touchdown point.

As illustrated in Fig. 1, ship 1 includes a control room 11, a cable tank 12, a brake device 13, a guide 14, a first winch 15, and a first pulley 16. Control room 11 is a room where the operation control of ship 1, the control of brake device 13, the monitoring of a touchdown point, which will be described later, the linearity monitoring of a cable guide pipe 5, and the like are performed. Control room 11 is also equipped with devices necessary for these controls. Cable tank 12 stores underwater cable 2 in a wound state. Brake device 13 adjusts the drawing speed of underwater cable 2 wound in cable tank 12, i.e., the running speed of underwater cable 2. Guide 14 guides the drawn-out underwater cable 2 to water surface 92. First winch 15 winds a first wire 31 that suspends cable guide pipe 5 (which will be described later). First pulley 16 guides first wire 31 drawn out from first winch 15 toward water surface 92. Although not shown, ship 1 includes a transceiver of an acoustic positioning system 61. The transceiver is drawn from ship 1 into water 93. The transceiver transmits signals to a first transponder 611 and a second transponder 612, which will be described later, and receives signals from first transponder 611 and second transponder 612. Acoustic positioning system 61 can acquire the three-dimensional coordinates of first transponder 611 and second transponder 612 by transmitting and receiving signals.

### [Step A]

Step A is a step of laying underwater cable 2 on water bottom 90. Step A includes a step A1 of monitoring a touchdown point for underwater cable 2 and a step A2 of disposing the drawn-out underwater cable 2 at the touchdown point. Step A may further comprise a step A3 of monitoring the linearity of cable guide pipe 5.

### (Step A1)

In step A1, the touchdown point for underwater cable 2 is monitored using a video from camera 60 and position information from first transponder 611 of acoustic positioning system 61. The touchdown point is a contact point between underwater cable 2 and water bottom 90. If step A1 is included, step A2 involves disposing underwater cable 2 at the touchdown point while monitoring the touchdown point for underwater cable 2. Camera 60 and first transponder 611 are attached to a lower end of cable guide pipe 5 or first wire 31, which is located near the touchdown point. Camera 60 and first transponder 611 may be directly attached to the lower end of cable guide pipe 5 or first wire 31, or camera 60 and first transponder 611 may be attached to an attachment jig (not shown) and the attachment jig may be attached to the lower end of cable guide pipe 5 or first wire 31. In the present embodiment, camera 60 and first transponder 611 are attached to the cylindrical cage-shaped member 5a disposed at a position closest to the touchdown point.

A distance from camera 60 to water bottom 90 can be determined by a video of water bottom 90 captured by camera 60. First transponder 611 can obtain three-dimensional position information of a location where first transponder 611 is attached. Therefore, the distance from the stern to first transponder 611 in both the vertical direction and the horizontal direction can be determined. First transponder 611 is attached to cable guide pipe 5 at the same height as camera 60. Since first transponder 611 is disposed at the same height as camera 60, it is possible to determine the distance from the stern to a touchdown point in the vertical direction, which is the sum of a distance from the stern to first transponder 611 in the vertical direction and a distance from first transponder 611 and camera 60 to water bottom 90.

Camera 60 and first transponder 611 can be used to continuously monitor the touchdown point. By monitoring the touchdown point, underwater cable 2 can be laid at a desired position. By determining the distance from the stern to the touchdown point in the vertical direction, underwater cable 2 can be laid in such a manner that the residual tension of the laid underwater cable 2 is within a desired range. Furthermore, underwater cable 2 can be laid in such a manner that the bending radius of underwater cable 2 at the touchdown point for underwater cable 2 is within an allowable range. Furthermore, an abnormality in the appearance of underwater cable 2 can be observed by using a video captured by camera 60. Since camera 60 is attached to the cylindrical cage-shaped member 5a disposed at a position closest to the touchdown point, a distance H between water bottom 90 and the cylindrical cage-shaped member 5a disposed at the position closest to the touchdown point can be determined. The determined distance H can be used to adjust the three-dimensional coordinates of the lower end of cable guide pipe 5.

Since the touchdown point can be monitored by using camera 60 and first transponder 611, the underwater cable laying method of the present embodiment does not require the use of an ROV. An ROV is limited by weather conditions. For example, under a weather condition under which an ROV cannot be used such as when the water current is fast, the laying operation must be put on hold. However, since the underwater cable laying method of the present embodiment does not use an ROV, there are fewer or no limitations on the weather conditions as compared with the case when an ROV is used. In other words, according to the underwater cable laying method of the present embodiment, it is possible to shorten or eliminate the waiting time due to the weather conditions. Furthermore, since the underwater cable laying method of the present embodiment does not use an ROV, it is possible to reduce the cost.

In step A1, the position information from altimeter 62 may be further used to determine the distance from the stern to the touchdown point in the vertical direction. Altimeter 62 is attached to, for example, a lower end of cable guide pipe 5 located near the touchdown point.

### (Step A2)

As illustrated in Fig. 1, in step A2, underwater cable 2 drawn out from ship 1 is inserted through the inside of cable guide pipe 5 disposed in water 93 and is disposed at a touchdown point for underwater cable 2. Cable guide pipe 5 is connected to first wire 31 extended from ship 1 into water 93 and is suspended in water 93. Cable guide pipe 5 is connected to first wire 31 and is disposed in front of first wire 31 in the traveling direction of ship 1, in other words, on the right side thereof in the paper of Fig. 1. Cable guide pipe 5 is not connected to an excavator that excavates water bottom 90. Since underwater cable 2 is inserted through the inside of cable guide pipe 5, underwater cable 2 is less likely to be bent to such a degree that underwater cable 2 would be damaged during the process of moving underwater cable 2 to water bottom 90. Furthermore, underwater cable 2 is less likely to kink or twist during the process of moving underwater cable 2 to water bottom 90.

However, unlike the present embodiment, if cable guide pipe 5 is connected to first wire 31 and is disposed behind first wire 31 in the traveling direction of ship 1, in other words, on the left side thereof in the paper of Fig. 1, the following may occur. As underwater cable 2 is inserted through the inside of cable guide pipe 5, underwater cable 2 comes into contact with cable guide pipe 5, which causes cable guide pipe 5 to rotate about first wire 31 so that it is disposed from the rear side to the front side of first wire 31 in the traveling direction of ship 1. The rotated cable guide pipe 5 rubs against underwater cable 2, which damages underwater cable 2.

On the other hand, in the present embodiment, since cable guide pipe 5 is connected to first wire 31 and is disposed in front of first wire 31 in the traveling direction of ship 1, even if cable guide pipe 5 and underwater cable 2 come into contact with each other when underwater cable 2 is inserted through the inside of cable guide pipe 5, cable guide pipe 5 is prevented from rotating about first wire 31. Therefore, it is possible to prevent cable guide pipe 5 from rubbing against underwater cable 2, and thus underwater cable 2 is less likely to be damaged. In addition, since cable guide pipe 5 is prevented from rotating, it is possible to prevent the entanglement of an umbilical cable 4, which will be described later.

### <Cable guide pipe>

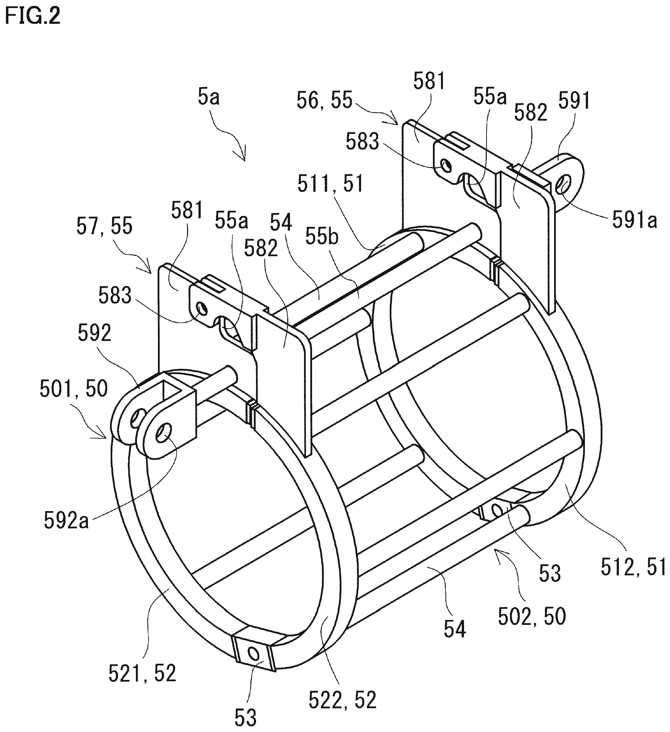

Cable guide pipe 5 includes a plurality of cylindrical cage-shaped members 5a. Each cylindrical cage-shaped member 5a is made of a metal such as steel. Each cylindrical cage-shaped member 5a may have a base portion made of a metal such as steel, and a rust-proof layer covering the surface of the base portion. The rust-proof layer prevents the base portion from being rusted. The plurality of cylindrical cage-shaped members 5a are arranged in series by first wire 31. As illustrated in Fig. 2, each of the plurality of cylindrical cage-shaped members 5a is provided with a through hole 55a through which first wire 31 illustrated in Fig. 1 is inserted. The central axis of through hole 55a is parallel to the central axis of each of the plurality of cylindrical cage-shaped members 5a. As illustrated in Fig. 1, first wire 31 has a stopper 311 for positioning the plurality of cylindrical cage-shaped members 5a by stopping or fixing the plurality of cylindrical cage-shaped members at intervals. The number of stoppers 311 is plural. The number of stoppers 311 can be appropriately selected according to the number of the cylindrical cage-shaped members 5a. If the number of stoppers 311 is one and is provided at the lower end of first wire 31, the single stopper 311 is required to support the weight of all the cylindrical cage-shaped members 5a. On the other hand, since the number of stoppers 311 is plural, each stopper 311 is only required to support the weight of the cylindrical cage-shaped member 5a disposed between adjacent stoppers 311, which reduces the load acting on each stopper 311. The number of stoppers 311 may be set to, for example, a number that that allows positioning for every five cylindrical cage-shaped members 5a. In addition to first wire 31, umbilical cable 4 illustrated in Fig. 1 may be inserted through the through hole 55a. Umbilical cable 4 is a bundle of cables that are connected to each of a camera 60, a first transponder 611, a second transponder 612, and an altimeter 62 of acoustic positioning system 61, which will be described later, and are configured to supply power and transmit and receive signals.

As illustrated in Fig. 2, each of the plurality of cylindrical cage-shaped members 5a has a main body 50 through which underwater cable 2 is inserted, and at least one protruding portion 55 extending from main body 50 in a direction away from the central axis of main body 50.

Main body 50 in the present embodiment has a base portion 501 and a door portion 502. In the present embodiment, an engagement convex 591 and an engagement concave 592 (which will be described later) are connected to base portion 501, and engagement convex 591 and engagement concave 592 are not connected to door portion 502. As to be described later, base portion 501 includes an arc-shaped first base portion 511, an arc-shaped second base portion 521, and a plurality of rod-shaped portions 54 connecting first base portion 511 and second base portion 521. Door portion 502 is connected to base portion 501 in such a manner that it can be moved to open and close main body 50. As to be described later, door portion 502 of the present embodiment includes an arc-shaped first movable portion 512, an arc-shaped second movable portion 522, and a plurality of rod-shaped portions 54 connecting first movable portion 512 and second movable portion 522. Door portion 502 allows the cylindrical cage-shaped member 5a to be fitted from a lateral side of underwater cable 2. Therefore, the cylindrical cage-shaped member 5a can be placed in water 93 by fitting the cylindrical cage-shaped member 5a on ship 1 from a lateral side of underwater cable 2 and dropping the cylindrical cage-shaped member 5a into water 93.

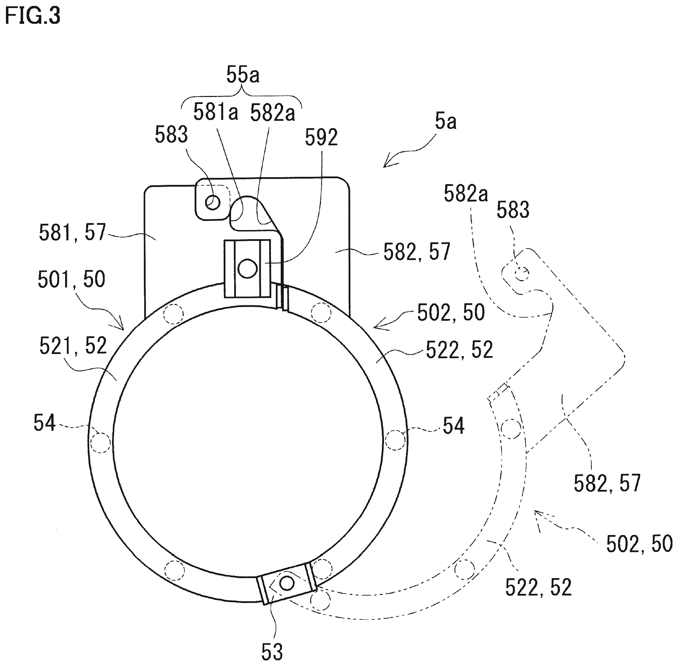

The number of protruding portions 55 may be one or more. The number of protruding portions 55 in the present embodiment is two. Each protruding portion 55 of the present embodiment is formed of a plate member. Each protruding portion 55 is provided with a through hole 55a. The two protruding portions 55 of the present embodiment are connected to each other by a rod-shaped connecting portion 55b. Each protruding portion 55 includes a first protruding piece 581 connected to base portion 501 of main body 50, and a second protruding piece 582 connected to door portion 502. Since first protruding piece 581 is connected to base portion 501 and second protruding piece 582 is connected to door portion 502, second protruding piece 582 can be opened and closed with respect to first protruding piece 581 by opening and closing door portion 502. As indicated by a solid line in Fig. 3, first protruding piece 581 and second protruding piece 582 have notches 581a and 582a facing each other when door portion 502 is closed. Through hole 55a is formed by notches 581a and 582a. A two-dot chain line in Fig. 3 indicates a state in which door portion 502 is opened. Cylindrical cage-shaped member 5a can be fitted onto first wire 31 from a lateral side thereof by opening door portion 502. In the present embodiment, the two first protruding pieces 581 are connected to each other by connecting portion 55b.

In the present embodiment, main body 50 includes a first annular portion 51, a second annular portion 52, and a plurality of rod-shaped portions 54, which will be described later. First annular portion 51 and second annular portion 52 are spaced apart from each other along the central axis of main body 50. The central axis of first annular portion 51 and the central axis of second annular portion 52 are coaxial. In the present embodiment, each of first annular portion 51 and second annular portion 52 is configured as an annular ring. However, unlike the present embodiment, each of first annular portion 51 and second annular portion 52 may be configured as a rectangular ring.

First annular portion 51 includes a first base portion 511 and a first movable portion 512. First base portion 511 in the present embodiment has an arc shape. First movable portion 512 is connected to first base portion 511 so that it can be moved to open and close first annular portion 51. First movable portion 512 of the present embodiment is connected to first base portion 511 by a hinge 53. First movable portion 512 in the present embodiment has an arc shape. Second annular portion 52 includes a second base portion 521 and a second movable portion 522. Second base portion 521 in the present embodiment has an arc shape. Second movable portion 522 is connected to second base portion 521 so that it can be moved to open and close second annular portion 52. Second movable portion 522 of the present embodiment is connected to second base portion 521 by hinge 53. Second movable portion 522 in the present embodiment has an arc shape. The position of first movable portion 512 around the central axis of first annular portion 51 is the same as the position of second movable portion 522 around the central axis of second annular portion 52. Hinge 53 that connects second base portion 521 and second movable portion 522 includes a thin-wall portion at an end of second base portion 521 and a thin-wall portion at an end of second movable portion 522. Each thin-wall portion is provided with a shaft hole. Hinge 53 is formed by overlapping the thin-wall portion of second base portion 521 and the thin-wall portion of second movable portion 522 with each other and inserting a shaft through the shaft holes of the overlapped thin-wall portions. The same applies to hinge 53 that connects first base portion 511 and first movable portion 512.

The plurality of rod-shaped portions 54 connect first annular portion 51 and second annular portion 52. The number of the rod-shaped portions 54 is not particularly limited and can be appropriately selected. The number of rod-shaped portions 54 in the present embodiment is six. One or more rod-shaped portions 54 among the plurality of rod-shaped portions 54 connect first base portion 511 and second base portion 521. One or more rod-shaped portions 54 among the plurality of rod-shaped portions 54 connect first movable portion 512 and second movable portion 522. In the present embodiment, first base portion 511 and second base portion 521 are connected to each other by three rod-shaped portions 54. Furthermore, in the present embodiment, first movable portion 512 and second movable portion 522 are connected to each other by three rod-shaped portions 54.

The two protruding portions 55 include a first protruding portion 56 extending from first annular portion 51 in a direction away from the central axis of first annular portion 51, and a second protruding portion 57 extending from second annular portion 52 in a direction away from the central axis of second annular portion 52. First protruding portion 56 and second protruding portion 57 face each other. Each of first protruding portion 56 and second protruding portion 57 is provided with a through hole 55a. The central axis of through hole 55a in first protruding portion 56 is parallel to the central axis of first annular portion 51. The central axis of through hole 55a in second protruding portion 57 is parallel to the central axis of second annular portion 52. The central axis of through hole 55a in first protruding portion 56 is coaxial with the central axis of through hole 55a in second protruding portion 57. Each of first protruding portion 56 and second protruding portion 57 includes a first protruding piece 581 and a second protruding piece 582. A through hole 583 provided in first protruding piece 581 is configured to communicate with a through hole 583 provided in second protruding piece 582 when door portion 502 is closed. A pin (not shown) is inserted into through hole 583 to maintain door portion 502 in a closed state. **In** the present embodiment, first protruding piece 581 and second protruding piece 582 are provided with notches 581a and 582a at diagonal positions of a substantially rectangular plate. As illustrated in Fig. 3, first protruding piece 581 is provided with a notch 581a at the upper right corner of the substantially rectangular plate, and second protruding piece 582 is provided with a notch 582a at the lower left corner of the substantially rectangular plate. When base portion 501 and door portion 502 are closed, notch 581a and notch 582a face each other to form through hole 55a.

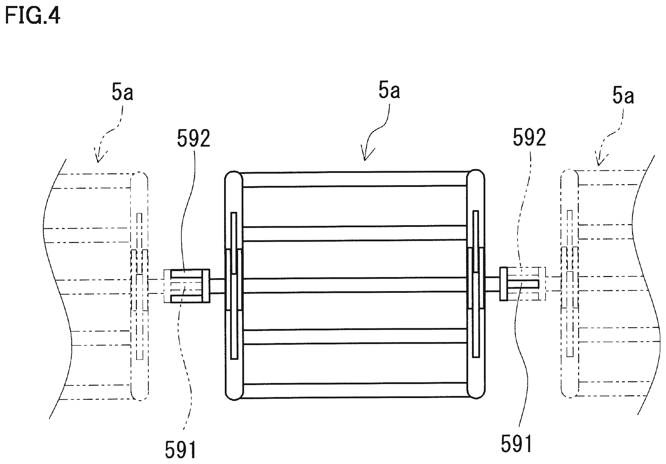

Each of the plurality of cylindrical cage-shaped members 5a may further include an engagement convex 591 and an engagement concave 592. Engagement convex 591 is connected to first protruding portion 56. Engagement convex 591 extends from first protruding portion 56 toward the opposite side to second protruding portion 57 along the central axis of through hole 55a. Engagement concave 592 is connected to second protruding portion 57. Engagement concave 592 extends from second protruding portion 57 toward the opposite side to first protruding portion 56 along the central axis of through hole 55a. Engagement concave 592 corresponds to engagement convex 591. Among the three cylindrical cage-shaped members 5a arranged in series as illustrated in Fig. 4, the cylindrical cage-shaped member 5a in the center is referred to as a first cylindrical cage-shaped member 5a, the cylindrical cage-shaped member 5a on the right side is referred to as a second cylindrical cage-shaped member 5a, and the cylindrical cage-shaped member 5a on the left side is referred to as a third cylindrical cage-shaped member 5a. Engagement concave 592 corresponds to engagement convex 591, which means that engagement convex 591 of the first cylindrical cage-shaped member 5a is engaged with engagement concave 592 of the second cylindrical cage-shaped member 5a, and engagement concave 592 of the first cylindrical cage-shaped member 5a is engaged with engagement convex 591 of the third cylindrical cage-shaped member 5a.

As illustrated in Fig. 2, engagement convex 591 in the present embodiment is constituted by a single protruding piece connected to a front edge of a rod-shaped portion connected to first protruding piece 581, and engagement concave 592 in the present embodiment is constituted by a bifurcated piece connected to a front edge of a rod-shaped portion connected to second protruding piece 582. The rod-shaped portion connected to first protruding piece 581 and the rod-shaped portion connected to second protruding piece 582 may be constituted by a member independent of connecting portion 55b or may be constituted by a part of connecting portion 55b. In the latter case, the rod-shaped portion connected to first protruding piece 581 and the rod-shaped portion connected to second protruding piece 582 may be constituted by connecting portion 55b that penetrates first protruding piece 581 and second protruding piece 582. In this case, the through hole of first protruding piece 581 and the through hole of second protruding piece 582 may be fixed to connecting portion 55b by welding or the like. As illustrated in Fig. 4, by inserting engagement convex 591 which is a protruding piece into engagement concave 592 which is a bifurcated piece, the first cylindrical cage-shaped member 5a and the second cylindrical cage-shaped member 5a are connected to each other, and the first cylindrical cage-shaped member 5a and the third cylindrical cage-shaped member 5a are connected to each other. As illustrated in Fig. 2, in the present embodiment, engagement convex 591 is provided with a through hole 591a, and engagement concave 592 is provided with a through hole 592a. Through hole 591a and through hole 592a are configured to communicate with each other when engagement convex 591 is inserted into engagement concave 592. The engagement state between engagement convex 591 and engagement concave 592 is maintained by inserting a pin (not shown) into through hole 591a and through hole 592a.

### (Step A3)

In step A3, the linearity of cable guide pipe 5 is monitored using the position information from first transponder 611 of acoustic positioning system 61 and the position information from second transponder 612 of acoustic positioning system 61. If step A3 is included, step A2 involves disposing underwater cable 2 at the touchdown point while monitoring the linearity of cable guide pipe 5. Second transponder 612 is attached to an upper end of cable guide pipe 5 or first wire 31 located in water 93 near water surface 92. The upper end of first wire 31 is located at the same height as the upper end of cable guide pipe 5 in first wire 31. Second transponder 612 may be directly attached to the upper end of cable guide pipe 5 or first wire 31, or second transponder 612 may be attached to an attachment jig (not shown) and the attachment jig may be attached to the upper end of cable guide pipe 5 or first wire 31. **In the** present embodiment, second transponder 612 is attached to the upper end of the cylindrical cage-shaped member 5a disposed at the position closest to water surface 92. By monitoring the linearity of cable guide pipe 5, it is possible to monitor the linearity of underwater cable 2 in cable guide pipe 5. Therefore, it is possible to determine whether underwater cable 2 in cable guide pipe 5 is subjected to a load such as excessive bending.

### [Second Embodiment]

### [Underwater Cable Laying Method]

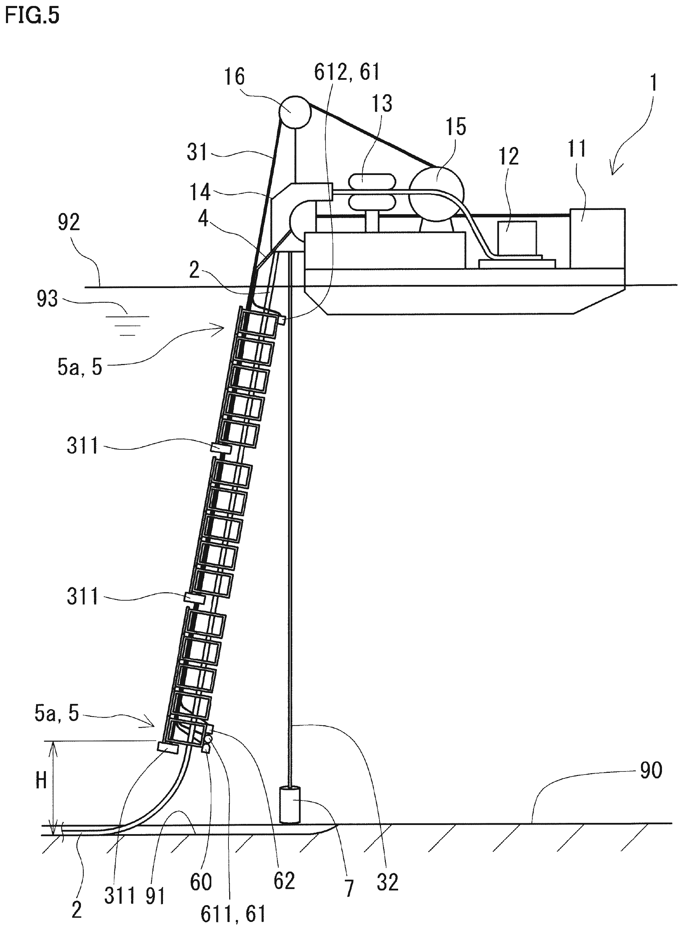

With reference to Fig. 5, an underwater cable laying method according to a second embodiment will be described. The underwater cable laying method according to the second embodiment is different from the underwater cable laying method according to the first embodiment in that step A of laying underwater cable 2 further includes a step A4 of excavating water bottom 90 by excavator 7 suspended in water 93 from ship 1.

Excavator 7 is suspended by a second wire 32. Second wire 32 is an independent member from first wire 31. Although not shown, second wire 32 is wound around a second winch and is guided toward water surface 92 by a second pulley. Second wire 32 extends into water 93 at a substantially right angle to water surface 92. In other words, the departure angle of second wire 32 with respect to water surface 92 is substantially 90°. In the present embodiment, second wire 32 is spaced apart from cable guide pipe 5 in such a manner that it is not connected to cable guide pipe 5. Second wire 32 is disposed in front of cable guide pipe 5 in the traveling direction of ship 1. Excavator 7 is equipped with a sand pump. Excavator 7 equipped with a sand pump can suck up soil on water bottom 90 and discharge the sucked soil. Therefore, according to the underwater cable laying method of the present embodiment, it is possible to continuously perform the step of forming trench 91 by excavating water bottom 90, the step of laying underwater cable 2 in trench 91 at a touchdown point for underwater cable 2, and the step of burying the underwater cable 2. In other words, according to the underwater cable laying method of the present embodiment, while trench 91 is being formed by excavating water bottom 90, underwater cable 2 can be disposed at the touchdown point for underwater cable 2 in the formed trench 91, and underwater cable 2 can be disposed at the touchdown point of trench 91 and buried at the same time. The touchdown point for underwater cable 2 of the present embodiment is a contact point between underwater cable 2 and the bottom of trench 91.

### [Third Embodiment]

### [Underwater Cable Laying Method]

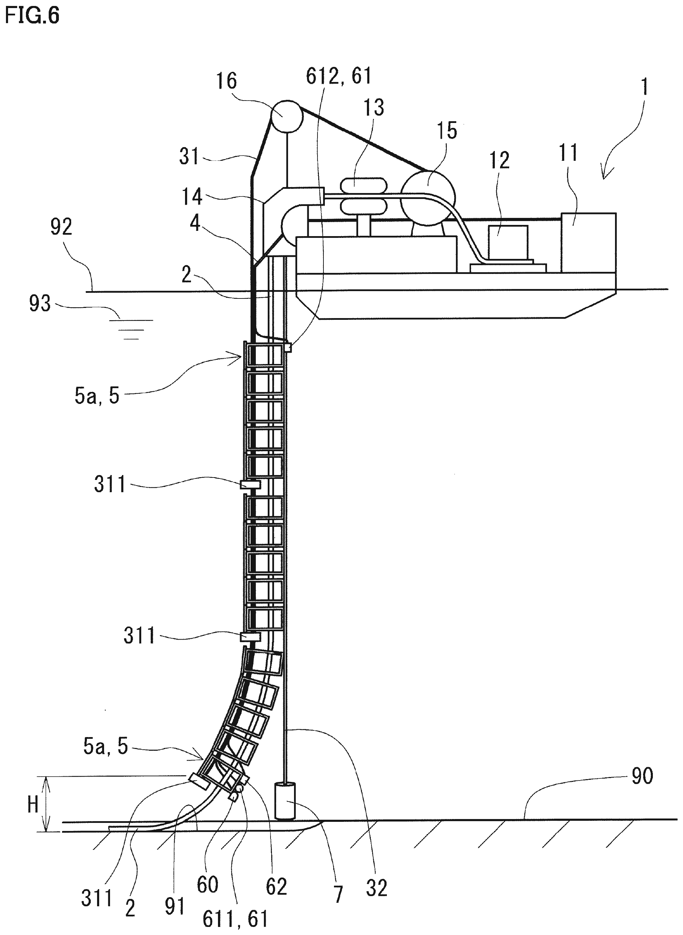

With reference to Fig. 6, an underwater cable laying method according to the third embodiment will be described. The underwater cable laying method according to the third embodiment is different from the underwater cable laying method according to the second embodiment in that a part of cable guide pipe 5 is connected to second wire 32 that suspends excavator 7.

In the present embodiment, cable guide pipe 5 is connected to second wire 32 at intervals from an upper end of cable guide pipe 5 to a specific point between the upper end and the lower end of cable guide pipe 5. Cable guide pipe 5 is connected to second wire 32 by, for example, a clip (not shown). Alternatively, although not shown, each cable guide pipe 5 may have an openable/closable protruding portion having a through hole through which second wire 32 is inserted. The openable/closable protruding portion is connected to base portion 501 so as not to interfere with the opening and closing of door portion 502 illustrated in Figs. 2 and 3. Cable guide pipe 5 is not connected to second wire 32 from the specific point to the lower end thereof.

### REFERENCE SIGNS LIST

1: ship; 11: control room; 12: cable tank; 13: brake device; 14: guide; 15: first winch; 16: first pulley; 2: underwater cable; 31: first wire; 311: stopper; 32: second wire; 4: umbilical cable; 5: cable guide pipe; 5a: cylindrical cage-shaped member; 50: main body; 501: base portion; 502: door portion; 51: first annular portion; 511: first base portion; 512: first movable portion; 52: second annular portion; 521: second base portion; 522: second movable portion; 53: hinge; 54: rod-shaped portion; 55: protruding portion; 55a: through hole; 55b: connecting portion; 56: first protruding portion; 57: second protruding portion; 581: first protruding piece; 581a: notch; 582: second protruding piece; 582a: notch; 583: through hole; 591: engagement convex; 591a: through hole; 592: engagement concave; 592a: through hole; 60: camera; 61: acoustic positioning system; 611: first transponder; 612: second transponder; 62: altimeter; 7: excavator; 90: water bottom; 91: trench; 92: water surface; 93: water; H: distance.

## Claims

1. An underwater cable laying method comprising a step of laying, on a water bottom, an underwater cable mounted on a ship, wherein
the step of laying the underwater cable includes:
a step of monitoring a touchdown point for the underwater cable using a camera footage and position information from a first transponder of an acoustic positioning system; and
a step of inserting the underwater cable drawn out from the ship through the inside of a cable guide pipe suspended in water from the ship and disposing the underwater cable at the touchdown point while monitoring the touchdown point,
the cable guide pipe is connected to a wire, which extends from the ship into the water, and is disposed in front of the wire in the traveling direction of the ship without being connected to an excavator that excavates the water bottom,
the camera and the first transponder are attached to a lower end of the cable guide pipe or the wire located near the touchdown point.

2. The underwater cable laying method according to claim 1, wherein
the step of laying the underwater cable further includes a step of monitoring the linearity of the cable guide pipe using position information from the first transponder and position information from a second transponder of the acoustic positioning system attached to an upper end of the cable guide pipe or the wire located in the water near a water surface, and
in the step of laying the underwater cable, the underwater cable is laid at the touchdown point while monitoring the linearity.

3. The underwater cable laying method according to claim 1 or claim 2, wherein
the step of laying the underwater cable further includes a step of excavating the water bottom using the excavator suspended in the water from the ship,
in the step of laying the underwater cable, the underwater cable is laid at a location excavated by the excavator, and
the excavator is equipped with a sand pump.

4. An underwater cable laying component comprising:
a cable guide pipe having a plurality of cylindrical cage-shaped members through which an underwater cable is inserted; and
a wire that connects the plurality of cylindrical cage-shaped members in such a manner that the plurality of cylindrical cage-shaped members are arranged in series, wherein
each of the plurality of cylindrical cage-shaped members is provided with a through hole through which the wire is inserted,
a central axis of the through hole is parallel to a central axis of each of the plurality of cylindrical cage-shaped members, and
the wire has a stopper for positioning the plurality of cylindrical cage-shaped members by stopping or fixing the plurality of cylindrical cage-shaped members at intervals.

5. The underwater cable laying component according to claim 4, wherein
each of the plurality of cylindrical cage-shaped members includes a main body which has a cylindrical cage shape and through which the underwater cable is inserted and a protruding portion which extends from the main body in a direction away from a central axis of the main body, and
the through hole is provided in the protruding portion.

6. The underwater cable laying component according to claim 5, wherein
the main body includes a base portion and a door portion that is movably connected to the base portion to open and close the main body.

7. The underwater cable laying component according to claim 6, wherein
the protruding portion includes a first protruding portion connected to the base portion and a second protruding portion connected to the door portion, and
the second protruding portion and the first protruding portion form the through hole when the door portion is closed.
